# EUROPEAN PATENT SPECIFICATION

(11) **EP 2 219 018 B1**
(45) Date of publication and mention of the grant of the patent: **17.02.2016**
(21) Application number: 09152981.8
(22) Date of filing: 17.02.2009
(51) Int. Cl.: H04B 10/071

(54) **Method for monitoring an optical data line, and optical transmission module therefor**
Verfahren zur Überwachung einer optischen Datenleitung und optisches Übertragungsmodul dafür
Procédé pour la surveillance d'une ligne de données optiques, et module de transmission optique associé

(43) Date of publication of application: 18.08.2010
(73) Proprietor: ALCATEL LUCENT, 92100 Boulogne-Billancourt (FR)
(72) Inventor: Pfeiffer, Thomas, 70569, Stuttgart (DE)
(74) Representative: Wetzel, Emmanuelle

(56) References cited:
- EP-A- 1 632 766
- WO-A-95/25274
- WO-A2-03/043200
- DE-A1- 19 722 420
- GB-A- 2 440 253
- GB-A- 2 440 952
- US-A1- 2008 199 185
- US-B1- 6 864 816
- R.MACIEJKO, L.HADELLIS: "Two signal processing enhancements for optical time domain reflectometry" JOURNAL OF LIGHTWAVE TECHNOLOGY, vol. LT-4, no. 5, May 1986 (1986-05), pages 538-546, XP009120824
- WUILMART L ET AL: "A PC-based method for the localisation and quantization of faults in passive tree-structured optical networks using the OTDR technique" LASERS AND ELECTRO-OPTICS SOCIETY ANNUAL MEETING, 1996. LEOS 96., IEEE,, vol. 2, 18 November 1996 (1996-11-18), pages 122-123, XP010204871 ISBN: 978-0-7803-3160-0

## Description

The invention relates to a method for monitoring an optical data line, according to the preamble of claim 1, and to an optical data transmission module, according to the preamble of claim 4.

The use of optical time domain reflectometry for monitoring optical data lines is well known in the art, e.g. from UK Patent Application GB 2440952 or from the article "Two Signal Processing Enhancements for Optical Time Domain Reflectometry" by R. Maciejko et al. in Journal of Lightwave Technology, Vol. LT-4, No. 5, May 1986.

Glass fibers are nowadays being used more and more in so-called metro networks and in access networks. In this context, there is an increasing need for continuous or at least regular monitoring of these optical data connections. The monitoring facilitates preventive measures when a data connection is gradually deteriorating, if this is detected early. High availability of the network is thereby ensured. This is important, for example, for the provision of critical services to business customers. In the event of failures as well, a monitoring device makes it possible to locate the error rapidly and determine the cause of error, in order to allow repair or rectification.

The network operator needs to be able to rapidly find the cause of a connection problem, for example in order to be able to distinguish between trouble with the glass fiber network and trouble at a network node, and, in the event of a glass fiber problem, to be able to identify the error location and the type of error or a deterioration occurring along the entire connection.

It is known to use so-called OTDR measuring equipment (OTDR = Optical Time Domain Reflectometry) in order to monitor the quality of optical connections, for instance to identify cable breaks, to find errors, to recognize increasing fiber attenuation or the deterioration of fiber link properties. Measurements can thereby be carried out as required, for instance in order to document a glass fiber network, or with a special measuring wavelength in multiplex operation in parallel with the working network.

The costs of such measuring equipment are high, because they need to be very reliable and also flexible in order to satisfy all the requirements during operation in a very wide variety of network configurations.

Therefore it is known, e.g. from EP 1 632 766 A1, to use components already provided for normal operation also for monitoring purposes instead of using stand-alone measuring equipment. Such components are an optical transmitter for transmitting to an optical data line, and an optical receiver for receiving from said optical data line. No savings with respect the monitoring unit as such can be learned therefrom.

It is an object of the present invention to also reduce the costs for the monitoring unit as such.

This problem according to the invention is solved by a method for monitoring an optical data line according to the teaching of claim 1, and by an optical data transmission module according to the teaching of claim 4.

Any OTDR measuring equipment necessarily needs components to record the measuring signal, here the backscattered light, as a basis for analyzing it. The most essential and normally also the most expensive component in such equipment is the means for converting the analogue signal to a digital one with relatively high accuracy. The use of high-resolution analogue-to-digital converters can be avoided when multiples of independent measurements with lower resolution are made and parameters for the data line to be monitored are derivated therefrom.

It is to be noted, that also in prior art solutions like those mentioned above it is well known to improve measurements by averaging results from multiples of samples. In the present invention in contrast thereto the taking of multiples of samples is a means to increase the resolution rather than the accuracy.

The document WO 03/043200 A2 discloses an optical Wavelength Divisional Multiplexing system, which uses a Delta-Sigma Analog-Digital Converter, which can have a very high sampling rate, over 100 GHz, and which is preferably optically sampled to achieve the very high sampling rate, which can be many times higher than the regeneration speed of the electronic quantizers used in the ADC.

To make such multiples of independent measurements in short time to either reduce the measuring time or to increase the spatial resolution necessitates the use of a high clock rate. It is suggested that the taking of samples is carried out with the clock foreseen for the transmission of data on the optical data line or directly is clocked with such data.

To make such multiples of independent measurements in short time also demands for a suitable communication between a device where the samples are taken and a system, to which such device is associated. It is suggested that the samples or parameters derivated therefrom are communicated as or instead of data received from the optical data line or in the way foreseen for communicating control data.

Further embodiments of the invention are to be found in the subclaims and in the accompanying description.

In the following the invention will be described with the aid of the accompanying drawings, in which:
- Figure 1: shows an optical transceiver module as an example of or as an optical data transmission module according to the invention.
- Figure 2: shows an other example of an optical data transmission module according to the invention.

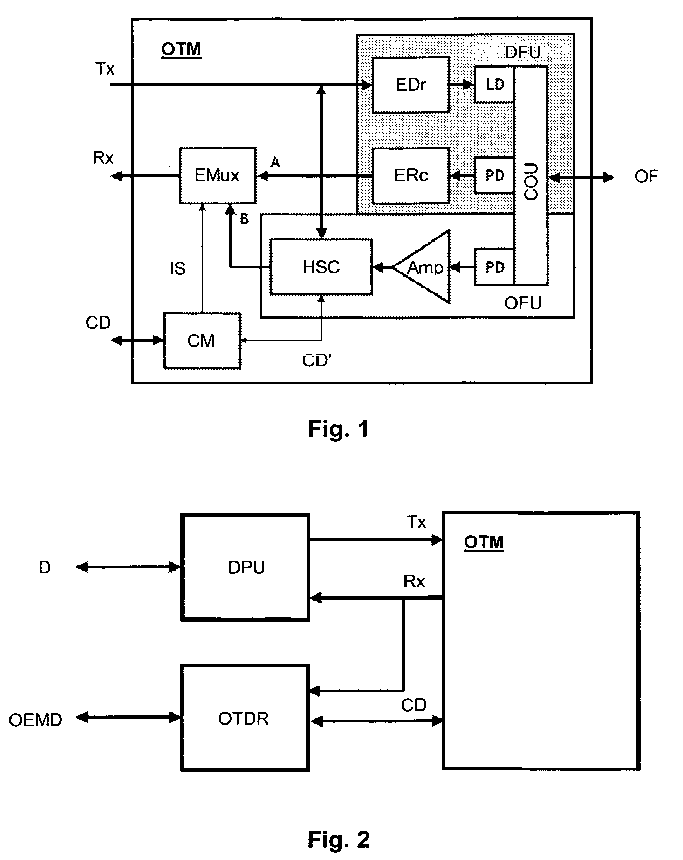

Figure 1 shows an optical transceiver module OTM including a data function unit DFU, an OTDR function unit OFU, an electrical multiplexer EMux, and a control module CM. A coupling optics unit COU is extending into both, the data function unit DFU and the OTDR function unit OFU.

The optical transceiver module OTM receives transmit data Tx in electrical form, and outputs received data Rx, also in electrical form; control data CD are both, received and output, in electrical form. These electrical data represent the interface to the system or apparatus, to which this optical transceiver module is associated. This may be whatever kind of central unit in an optical distribution network or it may be a subscriber's terminal.

The coupling optics unit COU on the other side is the interface to an optical link to a remote system or apparatus. This link here is represented by an optical fiber OF.

The data function unit DFU includes an electrical drive EDr driving a laser diode for sending the transmit data Tx via the coupling optics unit COU to the optical fiber OF. The data function unit DFU further includes an electrical receiver ERc for sending the received data Rx, via an electrical multiplexer EMux to be explained later, to the system or apparatus, to which this optical transceiver module is associated. These received data Rx are input from the optical fiber OF via the coupling optics unit COU and converted from light into an electrical signal by a photo diode PD.

Light coming from the optical fiber OF in addition is presented via the coupling optics unit COU and a further photo diode PD to the OTDR function unit OFU for fiber monitoring purposes. After amplifying this light in an amplifier Amp, according to the invention samples therefrom are taken with few quantization steps, here in this example by using a high-speed comparator HSC.

In the simplest form this high-speed comparator HSC is clocked by a clock or by data input instead of transmit data Tx, whereas the result of the comparison is output instead of received data Rx. The selection of what is output as or instead of received data Rx is done in the already mentioned electrical multiplexer EMux selected by an input select signal IS from a control module CM. So either received useful data from the electrical receiver ERc, input A, or data related to an OTDR measurement, coming from the high-speed comparator HSC, input B, are switched through. This control module CM receives control data CD from the system or apparatus, to which this optical transceiver module is associated. In this simple example a threshold for the high-speed comparator HSC is generated by the control module CM and applied as some kind of adapted control data CD'.

In figure 2 this optical transceiver module OTM is completed to a system including a data protocol unit DPU and a unit OTDR for OTDR measurements. The partition shown here is owed to legacy equipment practice.

The data protocol unit DPU is not influenced by this invention and is mainly foreseen for media access control (MAC) purposes and for dealing with the respective protocol(s). In this example the transmit data Tx and the received data Rx are depicted as one single data carrying line D vis-à-vis the system or apparatus, to which this optical transceiver module is associated.

The unit OTDR for OTDR measurements receives the output data of the high-speed comparator HSC instead of received data Rx, receives and sends the control data CD to and from the control module CM, and receives and sends data OEMD relating to the operation and maintenance of the optical link.

Independent from the partition between the unit OTDR for OTDR measurements, the control module CM, and the high-speed comparator HSC the monitoring of the optical line, here represented by the optical fiber OF, according to the invention works as follows:
An optical test signal is applied to the data line to be monitored, here the optical fiber OF. Conventionally one uses periodically repeated short pulses, but it is also known to use sine-wave signals or whatever other signal form. This test signal here is applied to the optical fiber via the laser diode LD. Simplest, but not absolutely necessary, this is done when no transmit data Tx are present.

The monitoring of the optical fiber entails receiving and analyzing light backscattered from the optical fiber and the devices connected thereto.

Such backscattered light is converted by the photo diode PD of the OTDR function unit OFU into an electrical signal, amplified in the amplifier Amp, and digitalized by means of the high-speed comparator HSC.

Here the invention makes use of some principles already known as such:
Measuring accuracy can be improved by averaging a couple of measured values, provided that there is no systematic measuring error.

Adding a dithering signal to a signal to be quantized imposes statistical measuring errors as a basis for improving measuring accuracy by averaging.

A noise signal is some kind of a dithering signal.

The amplitude of the dithering signal has to be at least in the range of a quantization step.

The invention further makes use of the facts that in the foreseen application, namely OTDR measuring, the signals to be measured are very noisy (SNR<<1), and such noise is practically white noise.

So even with a one-bit-quantization provided by the high-speed comparator HSC the quantization step still is lower than the amplitude of the noise. Thus with averaging enough samples the accuracy can be as high as it would be with a much higher number of quantization steps, that is with a high-resolution digital-to-analogue converter.

From such sequence of so digitalizes values whatever parameters for the data line to be monitored are derivated and provided for monitoring purposes as data OEMD relating to the operation and maintenance of the optical link.

## Claims

1. Method for monitoring an optical data line (OF) using optical time domain reflectometry, in which an optical test signal is applied to the data line (OF) to be monitored and in which light backscattered from the data line (OF) is received and analyzed, and where the optical data line (OF) is provided for the transmission of data clocked with a given clock, wherein received data is provided in electrical form, using a photo diode (PD) and an electrical receiver,
wherein the backscattered light is converted in a high-resolution analogue-to-digital manner by taking multiples of samples in a low-resolution analogue-to-digital manner, using a high-speed comparator(HSC),
**characterized**
- **in that** the taking of the samples is carried out with the clock foreseen for the transmission of data on the optical data line or directly is clocked with such data,
- **in that** said samples are provided to an electrical multiplexer (EMux) and in that said received data is provided to said electrical multiplexer (EMux),
- **in that** a select signal is provided, using a control module (CM),
- **in that** said samples or said received data are selected for output in dependence on said select signal, using said electrical multiplexer (EMux),
and **in that** from such samples parameters (OEMD) for the data line (OF) to be monitored are derivated and that these parameters (OEMD) are provided for monitoring purposes.

2. Method according to claim 1, **characterized in, that** samples or parameters derivated therefrom are communicated between a device where the samples are taken and a system, to which such device is associated, as or instead of data received from the optical data line or in the way foreseen for communicating control data.

3. Method according to claim 1, **characterized in, that** the taking of multiples of samples is performed by repeatedly receiving and analyzing such light backscattered from the data line (OF).

4. Optical data transmission module (OTM, fig. 2) with an optical transmitter (EDr, LD) for transmitting to an optical data line (OF), with an optical receiver (ERc) and a photo diode (PD) for receiving from said optical data line (OF) and with a monitoring unit (HSC, CM, OTDR), including a high-speed comparator (HSC), a control module (CM) and an electrical multiplexer (EMux), for carrying out measurements of the optical data line (OF) by means of optical time domain reflectometry,
**characterized in, that** for carrying out said measurements the method according to claim 1 is used.

## Patentansprüche

1. Verfahren zur Überwachung einer optischen Datenleitung (OF) unter Verwendung von optischer Zeitbereichsreflektometrie, wobei ein optisches Testsignal an die zu überwachende Datenleitung (OF) angelegt wird und wobei Rückstreulicht von der Datenleitung (OF) empfangen und analysiert wird, und wobei die optische Datenleitung (OF) für die mit einem gegebenen Takt getaktete Übertragung von Daten bereitgestellt wird, wobei empfangene Daten in elektrischer Form unter Verwendung einer Photodiode (PD) und eines elektrischen Empfängers bereitgestellt werden, wobei das Rückstreulicht in hochauflösender analog-zu-digitaler Weise umgewandelt wird durch Nehmen zahlreicher Proben in niedrigauflösender analog-zu-digitaler Weise, unter Verwendung eines Hochgeschwindigkeitskomparators (HSC),
**dadurch gekennzeichnet,**
- **dass** das Nehmen der Proben mit jenem Takt erfolgt, der für die Übertragung von Daten auf der optischen Datenleitung vorgesehen ist, oder direkt getaktet ist mit solchen Daten,
- **dass** besagte Proben einem elektrischen Multiplexer (EMux) bereitgestellt werden und dass die besagten empfangenen Daten dem besagten elektrischen Multiplexer (EMux) bereitgestellt werden,
- **dass** ein Auswahlsignal unter Verwendung eines Steuermoduls (CM) bereitgestellt wird,
- **dass** besagte Proben oder die besagten empfangenen Daten zur Ausgabe in Abhängigkeit von dem besagten Auswahlsignal ausgewählt werden, unter Verwendung des besagten elektrischen Multiplexers (EMux),
und **dass** von solchen Proben Parameter (OEMD) für die zu überwachende Datenleitung (OF) abgeleitet werden und dass diese Parameter (OEMD) für Überwachungszwecke bereitgestellt werden.

2. Verfahren nach Anspruch 1, **dadurch gekennzeichnet, dass** Proben oder davon abgeleitete Parameter zwischen einer Vorrichtung, wo die Proben genommen werden, und einem System kommuniziert werden, dem eine solche Vorrichtung zugeordnet ist, als oder anstellen von Daten, die von der optischen Datenleitung empfangen werden oder in der Art, die zum Kommunizieren von Steuerdaten vorgesehen ist.

3. Verfahren nach Anspruch 1, **dadurch gekennzeichnet, dass** das Nehmen zahlreicher Proben durch wiederholtes Empfangen und Analysieren eines solchen Rückstreulichts von der Datenleitung (OF) erfolgt.

4. Optisches Datenübertragungsmodul (OTM, Abb. 2) mit einem optischen Sender (EDr, LD) zum Senden an eine optische Datenleitung (OF), mit einem optischen Empfänger (ERc) und einer Photodiode (PD) zum Empfangen von der besagten optischen Datenleitung (OF) und mit einer Überwachungseinheit (HSC, CM, OTDR), umfassend einen Hochgeschwindigkeitskomparator (HSC), ein Steuermodul (CM) und einen elektrischen Multiplexer (EMux) zum Durchführen von Messungen der optischen Datenleitung (OF) mittels optischer Zeitbereichsreflektometrie,
**dadurch gekennzeichnet, dass** zum Durchführen der besagten Messungen das Verfahren nach Anspruch 1 verwendet wird.

## Revendications

1. Procédé de surveillance d'une ligne de données optique (OF) en utilisant la réflectométrie dans le domaine temporel, dans lequel un signal de test optique est appliqué à la ligne de données (OF) à surveiller et dans lequel la lumière rétrodiffusée depuis la ligne de données (OF) est reçue et analysée, la ligne de données optique (OF) étant destinée à la transmission de données synchronisées avec une horloge donnée, les données reçues étant fournies sous forme électrique en utilisant une photodiode (PD) et un récepteur électrique,
la lumière rétrodiffusée étant convertie de manière analogique/numérique à haute résolution en prélevant de multiples échantillons d'une manière analogique/numérique à basse résolution à l'aide d'un comparateur rapide (HSC),
**caractérisé**
- **en ce que** le prélèvement des échantillons est réalisé avec l'horloge prévue pour la transmission des données sur la ligne de données optique ou est directement synchronisé avec de telles données,
- **en ce que** lesdits échantillons sont délivrés à un multiplexeur électrique (EMux) et en ce que lesdites données reçues sont délivrées audit multiplexeur électrique (EMux),
- **en ce qu'**un signal de sélection est fourni en utilisant un module de commande (CM),
- **en ce que** lesdits échantillons ou lesdites données reçues sont sélectionnés pour être délivrés en sortie en fonction dudit signal de sélection en utilisant ledit multiplexeur électrique (EMux),
et **en ce que** des paramètres (OEMD) pour la ligne de données (OF) à surveiller sont dérivés de tels échantillons et que ces paramètres (OEMD) sont fournis à des fins de surveillance.

2. Procédé selon la revendication 1, **caractérisé en ce que** les échantillons ou les paramètres qui en sont dérivés sont communiqués entre un dispositif où les échantillons sont prélevés et un système auquel est associé un tel dispositif, en tant que ou à la place des données reçues de la part de la ligne de données optique ou de la manière prévue pour la communication des données de commande.

3. Procédé selon la revendication 1, **caractérisé en ce que** le prélèvement de multiples échantillons est effectué en recevant de manière répétitive et en analysant une telle lumière rétrodiffusée depuis la ligne de données (OF).

4. Module de transmission de données optique (OTM, fig. 2) comprenant un émetteur optique (EDr, LD) pour l'émission vers une ligne de données optique (OF), comprenant un récepteur optique (ERc) et une photodiode (PD) pour la réception depuis ladite ligne de données optique (OF) et comprenant une unité de surveillance (HSC, CM, OTDR), incluant un comparateur rapide (HSC), un module de commande (CM) et un multiplexeur électrique (EMux), pour réaliser des mesures de la ligne de données optique (OF) au moyen de la réflectométrie dans le domaine temporel,
**caractérisé en ce que** le procédé selon la revendication 1 est utilisé pour réaliser lesdites mesures.
